# EUROPEAN PATENT APPLICATION

(11) **EP 3 689 965 A1**
(43) Date of publication of application: **05.08.2020**
(21) Application number: 19155268.6
(22) Date of filing: 04.02.2019
(51) Int. Cl.: C08L 33/12

(54) **QUANTUM DOT FILM INCLUDING POLYCARBONATE-SILOXANE COPOLYMER BLENDS**

(71) Applicant: SABIC Global Technologies B.V., 4612 PX Bergen op Zoom (NL)
(72) Inventor: HEIN, Christopher Luke, Mt. Vernon, IN 47620 (US); ZHOU, Hao, Mt. Vernon, IN 47620 (US); ZHOU, Bing, Mt. Vernon, IN 47620 (US); CHELLAMUTHU, Manojkumar, Mt. Vernon, IN 47620 (US); GÜNBAS, Duygu Deniz, 4612 PX Bergen Op Zoom (NL)
(74) Representative: Elzaburu S.L.P.

(57) **Abstract**

A thermoplastic composition includes: a thermoplastic polymer including from about 30 wt% to about 90 wt% poly(methyl methacrylate) (PMMA) and from about 5 wt% to about 70 wt% of a poly(carbonate-siloxane) copolymer having a siloxane content of from about 20 wt% to about 60 wt%; and a plurality of photoluminescent materials. A method of forming a thermoplastic composition includes: (a) forming a poly(carbonate-siloxane) copolymer by forming siloxane-chloroformate prior to copolymerizing the poly(carbonate-siloxane) copolymer, wherein the poly(carbonate-siloxane) copolymer has a siloxane content of from about 20 wt% to about 60 wt%; (b) combining from about 5 wt% to about 70 wt% of the poly(carbonate-siloxane) copolymer with from about 30 wt% to about 90 wt% poly(methyl methacrylate) (PMMA) to form a polymer composition; and (c) combining a plurality of photoluminescent materials with the polymer composition to form the thermoplastic composition.

## Description

### FIELD OF THE DISCLOSURE

The present application relates to thermoplastic compositions, and in particular to thermoplastic compositions including poly(methyl methacrylate), poly(carbonate-siloxane) copolymer and photoluminescent materials (e.g., quantum dots).

### BACKGROUND OF THE DISCLOSURE

Blends of poly(methyl methacrylate) (PMMA) and polycarbonate (PC) are the focus of many investigations. PMMA is an amorphous polymer having excellent optical properties, chemical resistance, and high tensile strength, but it is also brittle, has low elongation at break and has high water absorption. In addition, blends of PMMA/PC are opaque, possess high haze and/or are immiscible. Blends of PMMA with PC would be expected to have improved flexibility which could be useful in electronic display applications, but suitable transparent blends including these polymers have not been developed.

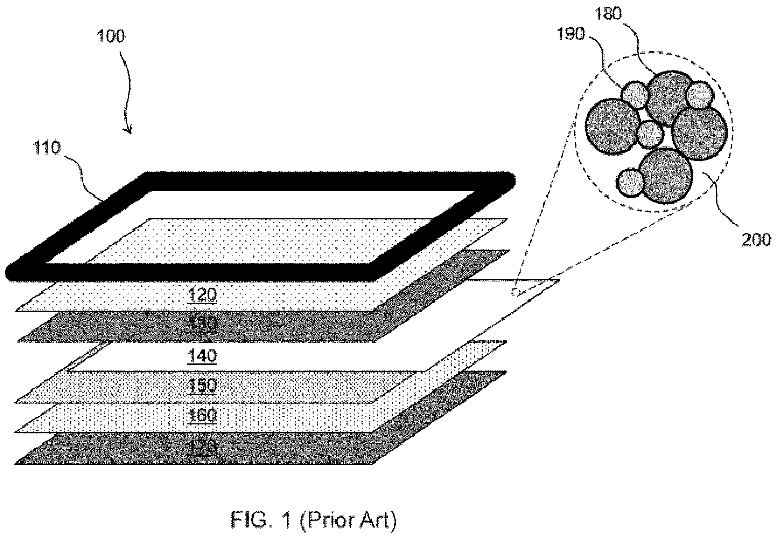

Quantum dot acrylic composites may incorporated into PMMA to produce photoluminescent film articles, but these films are unstable in hydrothermal conditions. PMMA rapidly degrades when exposed to heat or humidity, resulting in warpage and brittleness. As shown in exemplary FIG. 1, a quantum-dot based photoluminescent film article (quantum dot enhancement film, QDEF) is included as a component of a liquid crystal display (LCD) 100 used in display applications. The LCD 100 includes a bezel 110, a liquid crystal module (LCM) 120, a brightness enhancement film (BEF) 130, the QDEF 140, a light guide 150, a reflector sheet 160 and a back plate 170. The light guide 150 includes blue light or ultraviolet (UV) light emitting diodes (LEDs). The QDEF includes red and green quantum dots (180, 190) incorporated into an acrylic dispersion polymer 200.

QDEF films such as those describe in the LCD 100 include gas barrier layers, such as polyethylene terephthalate (PET), above and below the film. The gas barrier protects the unstable quantum dots, but the cost of films including these barrier layers is very high.

These and other shortcomings are addressed by aspects of the disclosure.

### SUMMARY

Aspects of the disclosure relate to a thermoplastic composition including: a thermoplastic polymer including from about 30 wt% to about 90 wt% poly(methyl methacrylate) (PMMA) and from about 5 wt% to about 70 wt% of a poly(carbonate-siloxane) copolymer having a siloxane content of from about 20 wt% to about 60 wt%; and a plurality of photoluminescent materials.

Further aspects of the disclosure relate to a method of forming a thermoplastic composition including: (a) forming a poly(carbonate-siloxane) copolymer by forming siloxane-chloroformate prior to copolymerizing the poly(carbonate-siloxane) copolymer, wherein the poly(carbonate-siloxane) copolymer has a siloxane content of from about 20 wt% to about 60 wt%; (b) combining from about 5 wt% to about 70 wt% of the poly(carbonate-siloxane) copolymer with from about 30 wt% to about 90 wt% poly(methyl methacrylate) (PMMA) to form a polymer composition; and (c) combining a plurality of photoluminescent materials with the polymer composition to form the thermoplastic composition.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 is an exploded side perspective view of a conventional LCD display.
FIG. 2 is a plot of fluorescent intensity vs. wavelength for example quantum dot compositions (Ex4.1 and Ex4.2) according to aspects of the disclosure.
FIG. 3 is a plot of fluorescent intensity vs. wavelength for example quantum dot compositions (Ex4.3 and Ex4.4) according to aspects of the disclosure.
FIG. 4 is a plot showing the change in normalized fluorescence intensity vs. aging time for example quantum dot compositions (Ex4.1 and Ex4.2) according to aspects of the disclosure.
FIG. 5 is a plot of fluorescent intensity vs. wavelength for an example quantum dot composition (Ex6.3) according to aspects of the disclosure.
FIG. 6 a is a plot of fluorescent intensity vs. wavelength for an example quantum dot composition (Ex6.13) according to aspects of the disclosure.
FIG. 7 is a plot of fluorescent intensity vs. wavelength for example quantum dot compositions (Ex8.1 and Ex8.2) according to aspects of the disclosure.

### DETAILED DESCRIPTION

The present disclosure can be understood more readily by reference to the following detailed description of the disclosure and the Examples included therein. In various aspects, the present disclosure pertains to thermoplastic compositions including: a thermoplastic polymer including from about 30 wt% to about 90 wt% poly(methyl methacrylate) (PMMA) and from about 5 wt% to about 70 wt% of a poly(carbonate-siloxane) copolymer having a siloxane content of from about 20 wt% to about 60 wt%; and a plurality of photoluminescent materials. Methods of making the thermoplastic compositions are also described. The thermoplastic compositions are photoluminescent when blue light emitting diode (LED) or ultraviolet (UV) LED light is applied to the composition. As such, the thermoplastic compositions may be useful in display applications, and in particular as a QDEF film for a display such as that described above.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used herein "Si content" or "X% Si" refers to the siloxane content of the component (e.g., the PC-Si copolymer) or composition.

As used in the specification and the appended claims, the singular forms "a," "an" and "the" include plural referents unless the context clearly dictates otherwise. Thus, for example, reference to "a poly(carbonate-siloxane) copolymer" includes mixtures of two or more poly(carbonate-siloxane) copolymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional additives" means that the additional additives can or cannot be substituted and that the description includes compositions that both include and that do not include additional additives.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, "polycarbonate" refers to an oligomer or polymer comprising residues of one or more dihydroxy compounds, e.g., dihydroxy aromatic compounds, joined by carbonate linkages; it also encompasses homopolycarbonates, copolycarbonates, and (co)polyester carbonates.

The terms "BisA," "BPA," or "bisphenol A," which can be used interchangeably, as used herein refers to a compound having a structure represented by the formula: 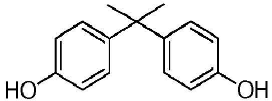 BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure relate to a thermoplastic composition including: a thermoplastic polymer including from about 30 wt% to about 90 wt% poly(methyl methacrylate) (PMMA) and from about 5 wt% to about 70 wt% of a poly(carbonate-siloxane) copolymer having a siloxane content of from about 20 wt% to about 60 wt%; and a plurality of photoluminescent materials. Unless otherwise indicated, all wt% values are based on the total weight of the composition, and the sum of wt% values for all components in the thermoplastic composition is 100%.

Any suitable PMMA polymer may be used in the thermoplastic polymer. Exemplary PMMA polymers include, but are not limited to, Acrylite® POQ66 or 8N available from Evonik, Plexiglas® V920A available from Arkema, and combinations thereof. In some aspects the thermoplastic composition includes from about 30 wt% to about 90 wt% PMMA. In further aspects the thermoplastic composition includes from about 50 wt% to about 90 wt% PMMA.

The poly(carbonate-siloxane) copolymer includes carbonate units and siloxane units. Suitable carbonate units are shown in Formula (1) 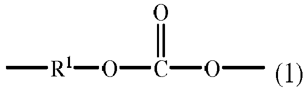 wherein at least 60 percent of the total number of R¹ groups is aromatic, or each R¹ contains at least one C₆₋₃₀ aromatic group. A combination of different R¹ groups can be present. The carbonate units can be derived from a dihydroxy compound such as an aromatic dihydroxy compound of Formula (2) or a bisphenol of Formula (3) 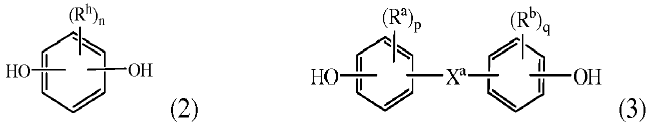 wherein in Formula (2), each R^{h} is independently a halogen atom, for example bromine, a C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4; and in Formula (3), R^{a} and R^{b} are each independently a halogen, C₁₋₁₂ alkoxy, or C₁₋₁₂ alkyl, and p and q are each independently integers of 0 to 4, such that when p or q is less than 4, the valence of each carbon of the ring is filled by hydrogen.

In an aspect in formulas (2) and (3), R^{a} and R^{b} are each independently C₁₋₃ alkyl or C₁₋₃ alkoxy, p and q are each independently 0 to 1, and X^{a} is a single bond, -O-,-S(O)-, -S(O)₂-, -C(O)-, a C₁₋₁₁ alkylidene of formula -C(R^{c})(R^{d}) - wherein R^{c} and R^{d} are each independently hydrogen or C₁₋₁₀ alkyl, each R^{h} is independently bromine, a C₁₋₃ alkyl, a halogen-substituted C₁₋₃ alkyl, and n is 0 to 1.

In still other aspects in Formula (2), p and q is each 0, or p and q is each 1, and R^{a} and R^{b} are each a C₁₋₃ alkyl group, preferably methyl, disposed meta to the hydroxy group on each arylene group; X^{a} is a bridging group connecting the two hydroxy-substituted aromatic groups, where the bridging group and the hydroxy substituent of each C6 arylene group are disposed para to each other on the C₆ arylene group, and X^{a} can be a substituted or unsubstituted C₃₋₁₈ cycloalkylidene; a C₁₋₂₅ alkylidene of the formula - C(R^{c})(R^{d}) - wherein R^{c} and R^{d} are each independently hydrogen, C₁₋₁₂ alkyl, C₁₋₁₂ cycloalkyl, C₇₋₁₂ arylalkylene, C₁₋₁₂ heteroalkyl, or cyclic C₇₋₁₂ heteroarylalkylene; or a group of the formula -C(=R^{e})- wherein R^{e} is a divalent C₁₋₁₂ hydrocarbon group.

Examples of diphenols (2) included resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like. A combination comprising different diphenol compounds can be used.

Examples of bisphenols (3) include 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis (4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfoxide, bis(4-hydroxyphenyl)sulfone, 9,9-bis(4-hydroxyphenyl)fluorene, 2,7-dihydroxypyrene, 6,6'-dihydroxy-3,3,3',3'-tetramethylspiro(bis)indane ("spirobiindane bisphenol"), 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 2,7-dihydroxycarbazole, or the like. A combination comprising different bisphenol compounds can be used.

Specific dihydroxy compounds include resorcinol, 2,2-bis(4-hydroxyphenyl) propane (bisphenol A or BPA), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl) cyclohexane, and 1,1-bis(4-hydroxyphenyl)-3,3,5-trimethylcyclohexane (TMC bisphenol).

In an aspect of Formula (2), R^{a} and R^{b} are each independently C₁₋₆ alkyl or C₁₋₃ alkoxy, p and q are each independently 0 to 1, and X^{a} is a single bond, -O-, -S(O)-, - S(O)₂-, -C(O)-, a C₁₋₁₁ alkylidene of formula -C(R^{c})(R^{d}) - wherein R^{c} and R^{d} are each independently hydrogen or C₁₋₁₀ alkyl, each R^{h} is independently bromine, a C₁₋₃ alkyl, a halogen-substituted C₁₋₃ alkyl, and n is 0 to 1.

In more preferred aspect, the bisphenol polycarbonate is a bisphenol A polycarbonate homopolymer, also referred to as bisphenol A homopolycarbonate, which has repeating structural carbonate units of Formula (4).

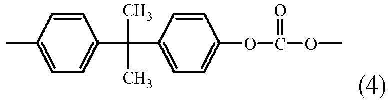

Such linear homopolymers containing bisphenol A carbonate units (BPA-PC) include those commercially available under the trade name LEXAN™ from SABIC; or a branched, cyanophenol end-capped bisphenol A homopolycarbonate produced via interfacial polymerization, containing 3 mol% 1,1,1-tris(4-hydroxyphenyl)ethane (THPE) branching agent, commercially available under the trade name LEXAN™ CFR from SABIC.

The siloxane units (also referred to as polysiloxane blocks) are optionally of Formula (5) 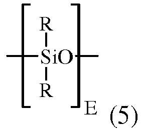 wherein each R is independently a C₁₋₁₃ monovalent organic group. For example, R can be a C₁₋₁₃ alkyl, C-C₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkylene, C₇₋₁₃ arylalkylenoxy, C₇₋₁₃ alkylarylene, or C₇₋₁₃ alkylarylenoxy. The foregoing groups can be fully or partially halogenated with one or more of fluorine, chlorine, bromine, or iodine. In an aspect, where a transparent poly(carbonate-siloxane) is desired, R is unsubstituted by halogen. A combination of the foregoing R groups can be used in the same poly(carbonate-siloxane).

In an aspect, each R is independently a C₁₋₃ alkyl, C₁₋₃ alkoxy, C₃₋₆ cycloalkyl, C₃₋₆ cycloalkoxy, C₆₋₁₄ aryl, C₆₋₁₀ aryloxy, C₇ arylalkylene, C₇ arylalkylenoxy, C₇ alkylarylene, or C₇ alkylarylenoxy. In still another aspect, each R is independently methyl, trifluoromethyl, or phenyl.

The value of E in Formula (5) can vary widely depending on the type and relative amount of each component in the thermoplastic composition, the desired properties of the composition, and like considerations. Generally, E has an average value of 2 to 1,000, or 2 to 500, 2 to 200, or 2 to 125, 5 to 80, or 10 to 70. In an aspect, E has an average value of 10 to 80 or 10 to 40, and in still another aspect, E has an average value of 40 to 80, or 40 to 70. Where E is of a lower value, e.g., less than 40, it can be desirable to use a relatively larger amount of the poly(carbonate-siloxane) copolymer. Conversely, where E is of a higher value, e.g., greater than 40, a relatively lower amount of the poly(carbonate-siloxane) copolymer can be used. A combination of a first and a second (or more) poly(carbonate-siloxane)s can be used, wherein the average value of E of the first copolymer is less than the average value of E of the second copolymer.

Suitable siloxane units have been described, for example, in WO 2008/042500 A1, WO 2010/076680 A1, and WO 2016/174592 A1. In an aspect, the siloxane units are of Formula (6) 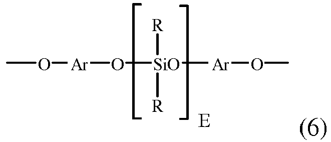 wherein E is as defined for Formula (5); each R can be the same or different, and is as defined for Formula (5); and Ar can be the same or different, and is a substituted or unsubstituted C₆-C₃₀ arylene, wherein the bonds are directly connected to an aromatic moiety. Ar groups in Formula (6) can be derived from a C₆-C₃₀ dihydroxyarylene compound, for example a dihydroxy compound of Formula (2) or Formula (3). Exemplary dihydroxy compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane, or a combination thereof.

Specific examples of siloxane units of Formula (6) include those of the formulas (6a) and (6b) 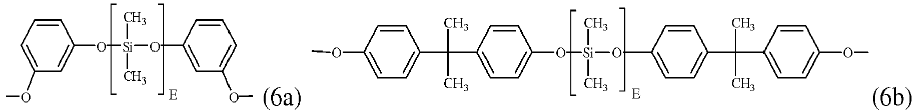 wherein E is as described in Formula (5). In an aspect, E has an average value of 10 to 80 or 10 to 40, and in still another aspect, E has an average value of 40 to 80, or 40 to 70.

In another aspect, the siloxane units are of Formula (7) 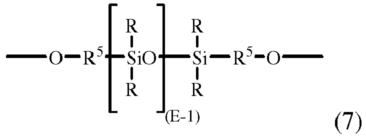 wherein R and E are as described for Formula (5), and each R⁵ is independently a divalent C₁₋₃₀ hydrocarbylene group, and wherein the polymerized polysiloxane unit is the reaction residue of its corresponding dihydroxy compound. In a specific aspect, the polydiorganosiloxane blocks are of Formula (8): 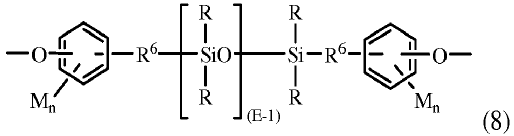 wherein R and E are as defined for Formula (5). R⁶ in Formula (8) is a divalent C₂₋₈ aliphatic group. Each M in Formula (8) can be the same or different, and can be a halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ arylalkylene, C₇₋₁₂ arylalkylenoxy, C₇₋₁₂ alkylarylene, or C₇₋₁₂ alkylarylenoxy, wherein each n is independently 0, 1, 2, 3, or 4.

In an aspect in Formula (8), M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl.

In another aspect in Formula (8), R is methyl, or a combination of methyl and trifluoropropyl, or a combination of methyl and phenyl. In still another aspect in Formula (8), R is methyl, M is methoxy, n is one, and R⁶ is a divalent C₁₋₃ aliphatic group. Preferred polydiorganosiloxane blocks are of the formulas 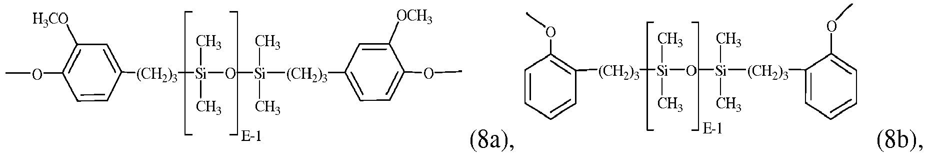 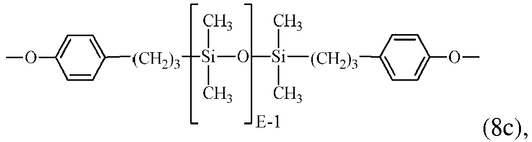 or a combination thereof, wherein E has an average value of 10 to 100, preferably 20 to 60, more preferably 30 to 50, or 40 to 50.

In an aspect, the poly(carbonate-siloxane) comprises carbonate units derived from bisphenol A, and repeating siloxane units (8a), (8b), (8c), or a combination thereof (preferably of formula 7a), wherein E has an average value of E has an average value of 10 to 100, or 20 to 60, or 30 to 60, or 40 to 60. In an aspect, the poly(carbonate-siloxane)s comprise carbonate units derived from bisphenol A and repeating siloxane units of Formula (8a) (8b), or (8c), wherein E has an average value of 10 to 100, or 20 to 60, or 30 to 50, or 40 to 50.

In some aspects the poly(carbonate-siloxane) copolymer has a siloxane content of about 20 to 60 wt%, based on the total weight of the poly(carbonate-siloxane) copolymer. In further aspects the poly(carbonate-siloxane) copolymer has a siloxane content of about 35 wt% to about 45 wt%, or about 40 wt%, based on the total weight of the poly(carbonate-siloxane) copolymer. As used herein, "siloxane content" of the poly(carbonate-siloxane) means the content of siloxane units based on the total weight of the poly(siloxane-carbonate). The poly(carbonate-siloxane) can have a weight average molecular weight of 26,000 to 45,000 Da, or 30,000 to 43,000 Da, or 35,000 to 40,000 Da as measured by gel permeation chromatography using a crosslinked styrene-divinyl benzene column, at a sample concentration of 1 milligram per milliliter, and as calibrated with bisphenol A polycarbonate standards. In other aspects, the poly(carbonate-siloxane) can have a weight average molecular weight of 10,000 to 100,000 Da, or 50,000 to 100,000 Da.

In certain aspects the thermoplastic composition further includes one or more additional polymers. Suitable additional polymers include, but are not limited to, low density polyethylene, poly(ethylene-propylene), styrene-butadiene rubber, polybutadiene, poly(butyl acrylate), silicone rubber, polyamide, polyaramide, polycarbonate, polyester, polyimide, polyetherimide, polystyrene, polyurethane, blends thereof, copolymers thereof, and combinations thereof.

In some aspects the thermoplastic composition includes from about 5 wt% to about 70 wt% of the poly(carbonate-siloxane) copolymer. In further aspects the thermoplastic composition includes from about 10 wt% to about 50 wt% of the poly(carbonate-siloxane) copolymer.

In certain aspects the plurality of photoluminescent materials emit light when blue LED or UV LED light is applied thereto. The plurality of photoluminescent materials may include, but are not limited to, quantum dots, phosphors, fluorescent materials, semiconductor nanocrystals, or a combination thereof. The thermoplastic composition may in some aspects include from about 50 parts per million (ppm) to about 15 wt% of the plurality of photoluminescent materials. In further aspects the thermoplastic composition includes from about 0.01 wt% to about 0.7 wt% of the thermoplastic composition. As used herein, "a photoluminescent material" is a material stimulated by light absorption in the Ultraviolet-Visible Spectroscopy (UV-Vis-NIR) spectral region, in which the material absorbs electromagnetic energy at a certain wavelength and then emits part of it at a different wavelength.

In particular aspects the plurality of photoluminescent materials include quantum dots. The quantum dots may be incorporated into a dispersion polymer, such as but not limited to an acrylic dispersion polymer. The dispersion polymer can help to prevent aggregation of the quantum dots and allow the quantum dots to be more evenly dispersed in the thermoplastic composition.

In certain aspects the plurality of photoluminescent materials are siloxane-treated or silica-treated, and may include quantum dots. Exemplary siloxane-treated quantum dots are available from, e.g., QDBrick.

In some aspects the thermoplastic composition includes from about 0.01 wt% to about 1.0 wt% of the plurality of photoluminescent materials (e.g., quantum dots). In other aspects the thermoplastic composition includes from about 0.02 wt% to about 0.5 wt% of the plurality of photoluminescent materials, or from about 0.02 wt% to about 0.3 wt% of the plurality of photoluminescent materials.

The quantum dots may be thermally, oxygen, or moisture stable, and may be stabilized by any conventional process. In particular aspects the quantum dots are stabilized by applying a shell to the quantum dot. In one aspect the shell is a metal shell. In certain aspects the metal shell is an alumina shell. Surface treatments applied to the quantum dot, such as those described herein, stabilize the quantum dot and allow the quantum dot to pass through an extruder barrel at elevated temperatures intact and are additionally stable to hydrothermal aging. Any suitable stabilized quantum dots may be used, such as (but not limited to) those available from Crystalplex Corp.

In some aspects the quantum dots are concentration-gradient quantum dots. The quantum dots include a passivation layer in certain aspects. In further aspects the quantum dots include reactive or non-reactive surface ligands, including but not to the reactive ligand oleic acid.

More specifically, in some aspects one or more of the quantum dots is a metal nanomaterial or an inorganic nanomaterial. The form of the quantum dots may include in certain aspects a nanoparticle, a nanofiber, a nanorod, or a nanowire.

Exemplary quantum dots according to aspects of the disclosure may include, but are not limited to, semiconductor nanocrystals selected from the group consisting of, but not limited to, Group II-VI semiconductor compounds, Group II-V semiconductor compounds, Group III-VI semiconductor compounds, Group III-V semiconductor compounds, Group IV-VI semiconductor compounds, Group II-III-VI compounds, Group II-IV-VI compounds, Group II-IV-V compounds, alloys thereof and combinations thereof.

Exemplary Group II elements include Zn, Cd, Hg or a combination thereof.

Exemplary Group III elements include Al, Ga, In, Ti or a combination thereof.

Exemplary Group IV elements include Si, Ge, Sn, Pb or a combination thereof.

Exemplary Group V elements include P, As, Sb, Bi or a combination thereof.

Exemplary Group VI elements include O, S, Se, Te or a combination thereof.

Exemplary Group II-VI semiconductor compounds include binary compounds, e.g., CdSe, CdS, CdTe, ZnS, ZnSe, ZnTe, ZnO, HgS, HgSe and HgTe; ternary compounds, e.g., CdSeS, CdSeTe, CdSTe, ZnSeS, ZnSeTe, ZnSTe, HgSeS, HgSeTe, HgSTe, CdZnS, CdZnSe, CdZnTe, CdHgS, CdHgSe, CdHgTe, HgZnS and HgZnSe; and quaternary compounds, e.g., CdZnSeS, CdZnSeTe, CdZnSTe, CdHgSeS, CdHgSeTe, CdHgSTe, HgZnSeS, HgZnSeTe and HgZnSTe.

Exemplary Group III-V semiconductor compounds include binary compounds, e.g., GaN, GaP, GaAs, GaSb, AlN, AlP, AlAs, AlSb, InN, InP, InAs and InSb; ternary compounds, e.g., GaNP, GaNAs, GaNSb, GaPAs, GaPSb, AlNP, AlNAs, AlNSb, AlPAs, AlPSb, InNP, InNAs, InN Sb, InPAs, InPSb, GaAlNP, AlGaN, AlGaP, AlGaAs, AlGaSb, InGaN, InGaP, InGaAs, InGaSb, AlInN, AlInP, AlInAs and AlInSb; and quaternary compounds, e.g., GaAlNAs, GaAlNSb, GaAlPAs, GaAlPSb, GaInNP, GaIn, NAs, GaInNSb, GaInPAs, GaInPSb, InAlNP, InAlNAs, InAlNSb, InAlPAs and InAlPSb.

Exemplary Group IV-VI semiconductor compounds include binary compounds, e.g., SnS, SnSe, SnTe, PbS, PbSe and PbTe; ternary compounds, e.g., SnSeS, SnSeTe, SnSTe, PbSeS, PbSeTe, PbSTe, SnPbS, SnPbSe and SnPbTe; and quaternary compounds, e.g., SnPbSSe, SnPbSeTe and SnPbSTe.

Exemplary Group IV semiconductor compounds include unary compounds, e.g., Si and Ge; and binary compounds, e.g., SiC and SiGe.

In particular aspects the quantum dots include CdS, InP, ZnO, ZnS, CuInS, CdSeS, or a combination thereof. In some aspects the quantum dots are cadmium-free, such as but not limited to the quantum dots described in Patent Cooperation Treaty (PCT) Publication no. WO2017201465, the disclosure of which is incorporated herein by this reference in its entirety.

When used, a concentration-gradient quantum dot includes an alloy of at least two semiconductors. The concentration (molar ratio) of the first semiconductor gradually increases from the core of the quantum dot to the outer surface of the quantum dot, and the concentration (molar ratio) of the second semiconductor gradually decreases from the core of the quantum dot to the outer surface of the quantum dot. Exemplary concentration-gradient quantum dots are described in, e.g., U.S. Patent No. 7,981,667, the disclosure of which is incorporated herein by this reference in its entirety.

In one aspect, the concentration-gradient quantum dot includes two semiconductors, a first semiconductor having the formula

CdₓZn₁₋ₓS_{y}Se_{1-y}

and a maximum molar ratio at the core of the quantum dot that gradually decreases to a minimum molar ratio at the outer surface of the quantum dot and a second semiconductor having the formula

Zn_{z}Se_{1-z}S_{w}Se_{1-w}

and a maximum molar ratio at the outer surface of the quantum dot that gradually decreases to a minimum molar ratio at the core of the quantum dot.

In another aspect, the concentration-gradient quantum dot includes two semiconductors, a first semiconductor having the formula

CdZnxSi-x

and a maximum molar ratio at the core of the quantum dot that gradually decreases to a minimum molar ratio at the outer surface of the quantum dot and a second semiconductor having the formula

ZnCd_{z}S_{1-z}

and a maximum molar ratio at the outer surface of the quantum dot that gradually decreases to a minimum molar ratio at the core of the quantum dot.

Where the quantum dots are described herein as having a shell or a multi-shell structure (i.e., a core and at least one shell), the core and the shell or plurality of shells may independently be formed of the semiconductor materials described above. Examples of semiconductor shells include, but are not limited to, CdS, CdSe, CdTe, PbS, PbSe, PbTe, ZnS, ZnSe, ZnTe, CdZnS, CdZnSe, CdZnTe, CdZnTeSe, CdZnSSe, GaAs, GaP, GaN, InP, InAs, GaAlAs, GaAlP, GaAlN, GaInN, GaAlAsP, or GaAlInN.

If included, the passivation layer may include, but is not limited to, a metal oxide (e.g., Al₂O₃, MgO, ZnO, etc.). The metal oxide may be in the form as a shell material surrounding the quantum dot. The passivation layer may function to shield the quantum dot from harsh outer environmental conditions during the manufacturing process or during operation, and may help the quantum dot maintain its optical properties.

In certain aspects the quantum dots include non-reactive surface ligands. The non-reactive surface ligands may include any ligand type that will interact (e.g., attach) to the quantum dot. Exemplary non-reactive surface ligands include, but are not limited to, hydrophobic ligands such as trioctylphosphine/trioctylphosphine oxide (TOP/TOPO), long-chain alkyls, alkylamines, and alkylthiols etc. or hydrophilic ligands, such as thiolate alcohols, thiolate acids etc. or other types of tether functionalities or biofunctionalities for targeted applications. The non-reactive surface ligands protect the quantum dot from damage.

In further aspects the quantum dots include reactive surface ligands, such as but not limited to oleic acid.

The quantum dots may have a size of from about 1 nanometer (nm) to about 100 nm in some aspects. In particular aspects the quantum dots have a size of from about 1 nm to about 50 nm, or from about 1 nm to about 30 nm.

In some aspects the thermoplastic composition includes one or more additional additives. The one or more additional additives may include, but is not limited to, a filler, a pigment, a whitening agent, an optical brightener, a surfactant, a processing aid, a thermal stabilizer, a photochemical stabilizer, a light scattering agent, and combinations thereof. When included in the thermoplastic composition, the light scattering agent may include, but is not limited to, ZnS, TiO₂, BaSO₄, silica, a siloxane-based material (e.g., silicone beads), an acrylic-based material, a metal oxide, and combinations thereof.

The thermoplastic composition in aspects has a nano-dispersed poly(carbonate-siloxane) copolymer phase in the PMMA and a single glass transition temperature (Tg).

The thermoplastic matrix may be transparent in certain aspects. As used herein, "transparent" means that the thermoplastic polymer matrix has a transmittance of at least about 80%, or at least about 85%, or at least about 90%, when measured in accordance with ASTM D1003 at a thickness of 1.2 millimeter (mm) or at a thickness of 2.2 mm. In some aspects transmission is determined in accordance with ASTM D1003-00, Procedure A, using a Gardner-Haze plus instrument and a D65 illuminant.

The thermoplastic composition is flexible in some aspects. As used herein, "flexible" means that the composition has a tensile elongation at break of 20% or higher.

In certain aspects the thermoplastic composition has a glass transition temperature that is at least about 3 °C higher, or at least about 5 °C, than that of a substantially identical reference thermoplastic composition that does not include the plurality of photoluminescent materials.

In yet further aspects the thermoplastic composition includes from about 0.01 wt% to about 1.0 wt% quantum dots, and the thermoplastic composition has a glass transition temperature that is at least about 3 °C higher, or at least about 5 °C higher, than that of a substantially identical reference thermoplastic composition that does not include the plurality of photoluminescent materials.

As used herein, a "substantially identical reference thermoplastic composition" is a reference composition that has the same components as the inventive composition, and the same relative amounts of the inventive composition, except that it does not include the listed component (e.g., the plurality of photoluminescent materials).

### Methods of Making Thermoplastic Compositions

Aspects of the disclosure further relate to methods of forming a thermoplastic composition, the method including: (a) forming a poly(carbonate-siloxane) copolymer by forming siloxane-chloroformate prior to copolymerizing the poly(carbonate-siloxane) copolymer; (b) combining from about 5 wt% to about 70 wt% of the poly(carbonate-siloxane) copolymer with from about 30 wt% to about 90 wt% poly(methyl methacrylate) (PMMA) to form a polymer composition; and (c) combining a plurality of photoluminescent materials with the polymer composition to form the thermoplastic composition. The poly(carbonate-siloxane) copolymer has a siloxane content of from about 20 wt% to about 60 wt% in the copolymer. Unless otherwise indicated, all wt% values are based on the total weight of the composition, and the sum of wt% values for all components in the thermoplastic composition is 100%.

In further aspects the poly(carbonate-siloxane) copolymer has a siloxane content of about 35 wt% to about 45 wt% in the copolymer, or about 40 wt% in particular aspects.

In some aspects step (c) is performed by melt processing the thermoplastic composition and the plurality of photoluminescent materials at a temperature of less than about 240 °C. PMMA allows for a lower processing temperature than other polymers conventionally used in articles such as films for display applications. As a result of the lower processing temperature, degradation of the photoluminescent materials (e.g., quantum dots) is reduced. Inclusion of the poly(carbonate-siloxane) copolymer described herein, however, provides the thermoplastic compositions to be flexible. Articles including the thermoplastic compositions may then also be flexible, which allows for their use in applications such as flexible display applications.

Other aspects of the disclosure relate to methods of forming a thermoplastic composition, the method including: (a) combining a poly(carbonate-siloxane) copolymer with a plurality of photoluminescent materials; and (b) combining from about 5 wt% to about 70 wt% of the combination from (a) with from about 30 wt% to about 90 wt% poly(methyl methacrylate) (PMMA) to form a polymer composition. The poly(carbonate-siloxane) copolymer has a siloxane content of from about 20 wt% to about 60 wt% in the copolymer. In this method, the plurality of photoluminescent materials may in some aspects include quantum dots in a form of an organic solvent dispersion. The solvent dispersion (for example but not limited to toluene) may be combined and mixed with the poly(carbonate-siloxane) copolymer (which may be in powder form), and the solvent may be removed by any suitable process (e.g., roto-evaporation). The resulting poly(carbonate-siloxane) copolymer/quantum dot dispersion may then be compounded with the PMMA to form the thermoplastic composition.

The thermoplastic compositions formed according to the methods described herein may include any of the components, amounts of components, and properties discussed above.

### Articles Including the Thermoplastic Composition

The thermoplastic compositions described herein may be incorporated into any suitable article. Shaped, formed, or molded articles comprising thermoplastic compositions are also provided. The thermoplastic compositions can be formed into useful shaped articles by a variety of means such as injection molding, extrusion (e.g., film/sheet extrusion), rotational molding, blow molding, thermoforming, calendaring, or melt casting.

In some aspects the article is a film, a sheet, a molded article, a welded article, a filament or a powder. In particular aspects the thermoplastic composition may be incorporated into a film, including but not limited to a QDEF film for an electronic display application. In specific aspects the thermoplastic composition is incorporated into a QDEF film for a consumer electronic display application. In some aspects articles (e.g., films) including the thermoplastic compositions described herein do not include a barrier layer, in contrast to conventional QDEF films. In further aspects articles including the thermoplastic compositions described herein include one or more barrier layers. The barrier layer may include an exterior barrier layer, or a barrier layer on the top and/or bottom of the film.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.
Aspect 1. A thermoplastic composition comprising:
   a thermoplastic polymer comprising from about 30 wt% to about 90 wt% poly(methyl methacrylate) (PMMA) and from about 5 wt% to about 70 wt% of a poly(carbonate-siloxane) copolymer having a siloxane content of from about 20 wt% to about 60 wt%; and
   a plurality of photoluminescent materials.
Aspect 2. The thermoplastic composition according to Aspect 1, wherein the poly(carbonate-siloxane) copolymer has a siloxane content of from about 35 wt% to about 45 wt%.
Aspect 3. The thermoplastic composition according to Aspect 1, wherein the poly(carbonate-siloxane) copolymer has a siloxane content of about 40 wt%.
Aspect 4. The thermoplastic composition according to any of Aspects 1 to 3, wherein the plurality of photoluminescent materials comprise quantum dots, phosphors, fluorescent materials, semiconductor nanocrystals, or a combination thereof.
Aspect 5. The thermoplastic composition according to any of Aspects 1 to 4, wherein the plurality of photoluminescent materials comprise quantum dots.
Aspect 6. The thermoplastic composition according to Aspect 5, wherein the quantum dots are incorporated into an acrylic dispersion polymer.
Aspect 7. The thermoplastic composition according to any of Aspects 1 to 6, wherein the plurality of photoluminescent materials are siloxane-treated or silica-treated.
Aspect 8. The thermoplastic composition according to any of Aspects 1 to 7, wherein the plurality of photoluminescent materials comprise quantum dots, and the quantum dots comprise from about 0.01 wt% to about 1.0 wt% of the thermoplastic composition.
Aspect 9. The thermoplastic composition according to any of Aspects 1 to 8, wherein the thermoplastic composition has a glass transition temperature that is at least about 3 °C higher than that of a substantially identical reference thermoplastic composition that does not include the plurality of photoluminescent materials.
Aspect 10. The thermoplastic composition according to any of Aspects 1 to 3, wherein the plurality of photoluminescent materials comprise siloxane-treated or silica-treated quantum dots, the quantum dots comprise from about 0.01 wt% to about 1.0 wt% of the thermoplastic composition, and the thermoplastic composition has a glass transition temperature that is at least about 3 °C higher than that of a substantially identical reference thermoplastic composition that does not include the plurality of photoluminescent materials.
Aspect 11. The thermoplastic composition according to Aspect 5 to 10, wherein the quantum dots comprise an alumina shell.
Aspect 12. The thermoplastic composition according to any of Aspects 5 to 11, wherein the quantum dots comprise CdS, InP, ZnO, ZnS, CuInS, CdSeS, CdSe, or a combination thereof.
Aspect 12A. The thermoplastic composition according to any of Aspects 5 to 11, wherein the quantum dots are cadmium-free.
Aspect 13. The thermoplastic composition according to any of Aspects 5 to 12A, wherein the quantum dots comprise an alumina shell and have a core-shell structure or are concentration-gradient quantum dots.
Aspect 14. The thermoplastic composition according to any of Aspects 5 to 13, wherein the quantum dots are thermally stable or moisture stable.
Aspect 15. The thermoplastic composition according to any of Aspects 1 to 14, wherein the composition further comprises one or more additional additives.
Aspect 16. The thermoplastic composition according to Aspect 15, wherein the one or more additional additives is selected from the group consisting of: a filler; a pigment; a whitening agent; an optical brightener; a surfactant; a processing aid; a thermal stabilizer; a photochemical stabilizer; a light scattering agent; and combinations thereof.
Aspect 17. The thermoplastic composition according to Aspect 16, wherein the light scattering agent comprises ZnS, TiO₂, BaSO₄, silica, a siloxane-based material, an acrylic-based material, a metal oxide, or a combination thereof.
Aspect 18. The thermoplastic composition according to any of Aspects 1 to 17, wherein the composition has a nano-dispersed poly(carbonate-siloxane) copolymer phase in the PMMA and a single glass transition temperature (Tg).
Aspect 19. The thermoplastic composition according to any of Aspects 1 to 18, wherein the composition is flexible.
Aspect 20. The thermoplastic composition according to any of Aspects 1 to 19, wherein the plurality of photoluminescent materials comprise green quantum dots and red quantum dots, and a composition comprising an equal content of green quantum dots and red quantum dots comprises a change in peak wavelength (ΔPWL) for the green quantum dots that is within about 1.0 nanometers (nm) of the ΔPWL for the red quantum dots.
Aspect 21. The thermoplastic composition according to any of Aspects 1 to 20, wherein the plurality of photoluminescent materials comprise green quantum dots and red quantum dots, and a composition comprising an equal content of green quantum dots and red quantum dots comprises a change in full width at half maximum (ΔFWHM) for the green quantum dots that is within about 1.0 nm of the ΔFWHM for the red quantum dots.
Aspect 22. A method of forming a thermoplastic composition comprising:
   (a) forming a poly(carbonate-siloxane) copolymer by forming siloxane-chloroformate prior to copolymerizing the poly(carbonate-siloxane) copolymer, wherein the poly(carbonate-siloxane) copolymer has a siloxane content of from about 20 wt% to about 60 wt%;
   (b) combining from about 5 wt% to about 70 wt% of the poly(carbonate-siloxane) copolymer with from about 30 wt% to about 90 wt% poly(methyl methacrylate) (PMMA) to form a polymer composition; and
   (c) combining a plurality of photoluminescent materials with the polymer composition to form the thermoplastic composition.
Aspect 23. The method according to Aspect 22, wherein the poly(carbonate-siloxane) copolymer has a siloxane content of about 40 wt%.
Aspect 24. The method according to Aspect 22 or 23, wherein step (c) is performed by melt processing the thermoplastic composition and the plurality of photoluminescent materials at a temperature of less than about 240 °C.
Aspect 25. The method according to any of Aspects 22 to 24, wherein the thermoplastic composition has a nano-dispersed poly(carbonate-siloxane) copolymer phase in the PMMA and a single glass transition temperature (Tg).
Aspect 26. The method according to any of Aspects 22 to 25, wherein the poly(carbonate-siloxane) copolymer has a siloxane content of from about 35 wt% to about 45 wt%.
Aspect 27. The method according to any of Aspects 22 to 26, wherein the poly(carbonate-siloxane) copolymer has a siloxane content of about 40 wt%.
Aspect 28. The method according to any of Aspects 22 to 27, wherein the plurality of photoluminescent materials comprise quantum dots, phosphors, fluorescent materials, semiconductor nanocrystals, or a combination thereof.
Aspect 29. The method according to any of Aspects 22 to 28, wherein the plurality of photoluminescent materials comprise quantum dots.
Aspect 30. The method according to Aspect 29, wherein the quantum dots are incorporated into an acrylic dispersion polymer.
Aspect 31. The method according to any of Aspects 22 to 30, wherein the plurality of photoluminescent materials are siloxane-treated or silica-treated.
Aspect 32. The method according to any of Aspects 22 to 31, wherein the plurality of photoluminescent materials comprise quantum dots, and the quantum dots comprise from about 0.01 wt% to about 1.0 wt% of the thermoplastic composition.
Aspect 33. The method according to any of Aspects 22 to 32, wherein the thermoplastic composition has a glass transition temperature that is at least about 3 °C higher than that of a substantially identical reference thermoplastic composition that does not include the plurality of photoluminescent materials.
Aspect 34. The method according to any of Aspects 22 to 27, wherein the plurality of photoluminescent materials comprise siloxane-treated or silica-treated quantum dots, the quantum dots comprise from about 0.01 wt% to about 1.0 wt% of the thermoplastic composition, and the thermoplastic composition has a glass transition temperature that is at least about 3 °C higher than that of a substantially identical reference thermoplastic composition that does not include the plurality of photoluminescent materials.
Aspect 35. The method according to Aspect 29 to 34, wherein the quantum dots comprise an alumina shell.
Aspect 36. The method according to any of Aspects 29 to 35, wherein the quantum dots comprise CdS, InP, ZnO, ZnS, CuInS, CdSeS, CdSe, or a combination thereof.
Aspect 36A. The thermoplastic composition according to any of Aspects 29 to 35, wherein the quantum dots are cadmium-free.
Aspect 37. The method according to any of Aspects 29 to 36A, wherein the quantum dots comprise an alumina shell and have a core-shell structure or are concentration-gradient quantum dots.
Aspect 38. The method according to any of Aspects 29 to 37, wherein the quantum dots are thermally stable or moisture stable.
Aspect 39. The method according to any of Aspects 29 to 38, wherein the composition further comprises one or more additional additives.
Aspect 40. The method according to Aspect 39, wherein the one or more additional additives is selected from the group consisting of: a filler; a pigment; a whitening agent; an optical brightener; a surfactant; a processing aid; a thermal stabilizer; a photochemical stabilizer; a light scattering agent; and combinations thereof.
Aspect 41. The thermoplastic composition according to Aspect 40, wherein the light scattering agent comprises ZnS, TiO₂, BaSO₄, silica, a siloxane-based material, an acrylic-based material, a metal oxide, or a combination thereof.
Aspect 42. The method according to any of Aspects 22 to 41, wherein the composition has a nano-dispersed poly(carbonate-siloxane) copolymer phase in the PMMA and a single glass transition temperature (Tg).
Aspect 43. The method according to any of Aspects 22 to 42, wherein the composition is flexible.
Aspect 44. The method according to any of Aspects 22 to 43, wherein the plurality of photoluminescent materials comprise green quantum dots and red quantum dots, and a composition comprising an equal content of green quantum dots and red quantum dots comprises a change in peak wavelength (ΔPWL) for the green quantum dots that is within about 1.0 nanometers (nm) of the ΔPWL for the red quantum dots.
Aspect 45. The method according to any of Aspects 22 to 44, wherein the plurality of photoluminescent materials comprise green quantum dots and red quantum dots, and a composition comprising an equal content of green quantum dots and red quantum dots comprises a change in full width at half maximum (ΔFWHM) for the green quantum dots that is within about 1.0 nm of the ΔFWHM for the red quantum dots.
Aspect 46. An article comprising the thermoplastic composition according to any of Aspects 1 to 45.
Aspect 47. The article according to Aspect 46, wherein the article is a film, a sheet, a molded article, a welded article, a filament or a powder.
Aspect 48. The article according to Aspect 46 or 47, wherein the article is a film and the film does not include a barrier layer.
Aspect 49. The article according to any of Aspects 46 to 48, wherein the article is a film for an electronic display application.
Aspect 50. The article according to Aspect 49, wherein the electronic display application is a flexible display.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

The compositions described herein were prepared under the following conditions:

The extrusion used a DSM Xplore 15 cubic centimeter (cc) micro compounder, 1 minute cycle, melt at 220 °C, speed 50 revolutions per minute (RPM), force 1000 Newtons (N), acceleration 1200 RPM/minute. The powder was fed slowly into the extruder and the resulting strand was pelletized separately.

A film was formed from the thermoplastic composition (film pressout) from 4-gram batches to make a 14 mil (0.001 inch) thick film. The pellets were placed on aluminum foil and held in the pressout for 40 seconds (s). 1000 pounds per square inch (PSI) pressure was applied for 30 s, then 2000 PSI for 30 s, and then 6000 PSI for 40 s.

Luminescence emission spectra were measured on a Horiba Fluorolog®-3 fluorescence spectrometer equipped with a 450 watt (W) CW Xenon arc lamp, dual-grating excitation and dual-grating emission monochromators, and a Hamamatsu R928P photomultiplier tube detector. The gratings were blazed at 330 nanometers (nm) (1200 grooves per millimeter (mm)) and 500 nm (1200 grooves/mm) for the excitation and emission monochromators, respectively. All of the samples were excited at a wavelength of 450 nm with the emission spectra collected in the wavelength range corresponding to the embedded QD properties. The detector signal was ratioed to the reference signal to obtain a corrected emission scan.

Compositions described herein included materials set forth below in Table 1:

**Table 1 - Materials**

| **Component** | **Source** |
|---|---|
| PMMA - POQ66 or 8N | Evonik |
| PC-Siloxane copolymer (40% siloxane content) | SABIC |
| PC-Siloxane copolymer (20% siloxane content) - C9030P | SABIC |
| PC-Siloxane copolymer (6.5% siloxane content) - C9030T | SABIC |
| PC-Siloxane copolymer (60% siloxane content) | SABIC |
| Optical quality PC (OQPC) | SABIC |
| LEXAN™ 121R PC | SABIC |
| Green QD (acrylic), Gen5, 2 milligram (mg) per gram acrylic masterbatch, peak wavelength (PWL) of QD 517 nanometer (nm) | Crystalplex |
| Red QD (acrylic), Gen5, 2 mg/g acrylic masterbatch, peak wavelength (PWL) of QD 620 nanometer (nm) | Crystalplex |
| Green QD (siloxane-treated) in powder. QD concentration of 3.5 wt% in the powder. | QDBrick |
| Red QD (siloxane-treated) in powder. QD concentration of 2.7 wt% in the powder. | QDBrick |

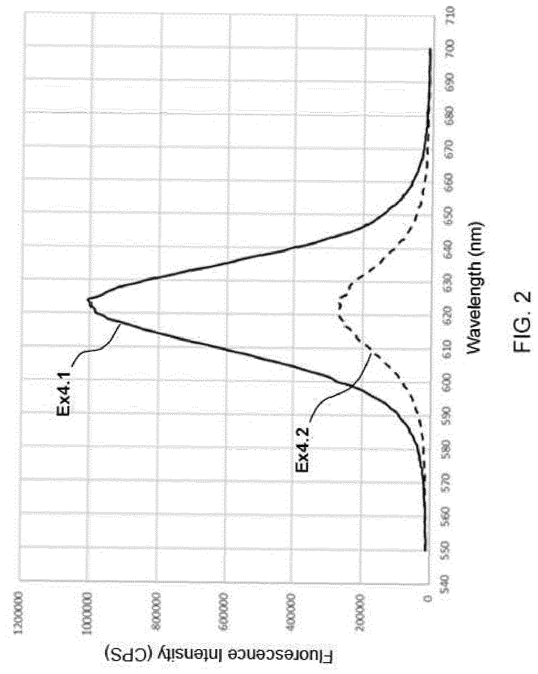

As shown in FIGS. 2A, 2B, transparent blends of PMMA and PC-Si copolymer (40% Si content) were produced across a wide resin ratio range:

**Table 2A - Varying Amounts of PMMA/PC-Si Copolymer**

| **Formulation** | **C2** | **Ex2.1** | **Ex2.2** | **Ex2.3** | **Ex2.4** | **Ex2.5** | **Ex2.6** |
|---|---|---|---|---|---|---|---|
| PMMA | 100 | 95 | 90 | 80 | 80 | 70 | 60 |
| PC-Si (40% Si content) | | 5 | 10 | 20 | 20 | 30 | 40 |

| **Conditions** | | | | | | | |
|---|---|---|---|---|---|---|---|
| Physical form: pellet/powder | p | p/pwd | p/pwd | p/pwd | pwd/pwd | p/pwd | p/pwd |
| Extruder | Micro | Micro | Micro | Micro | Macro | Micro | Micro |
| Melt Temp °C | 220 | 220 | 220 | 220 | 230 | 220 | 220 |

| Performance: | | | | | | | |
|---|---|---|---|---|---|---|---|
| Clear, Haze, High Haze, Opaque, Brittle, Flexible, Ductile, DeLaminated | C,B | C,B | C,B | C,H,F | C,H,F | C,H,F | C,H,F |

**Table 2B - Varying Amounts of PMMA/PC-Si Copolymer**

| **Formulation** | **Ex2.7** | **Ex2.8** | **Ex2.9** | **Ex2.10** | **Ex2.11** | **Ex2.12** |
|---|---|---|---|---|---|---|
| PMMA | 60 | 50 | 40 | 30 | 20 | |
| PC-Si (40% Si content) | 40 | 50 | 60 | 70 | 80 | 100 |

| **Conditions** | | | | | | |
|---|---|---|---|---|---|---|
| Physical form: pellet/powder | pwd/pwd | pwd/pwd | pwd/pwd | p/pwd | p/pwd | pwd |
| Extruder | Macro | Micro | Micro | Micro | Micro | Micro |
| Melt Temp °C | 230 | 220 | 220 | 220 | 220 | 220 |

| **Performance** | | | | | | |
|---|---|---|---|---|---|---|
| Clear, Haze, High Haze, Opaque, Brittle, Flexible, Ductile, DeLaminated | C,H,F | C,H,F | C,H,F | HH,D,DL | HH,D,DL | H,B |

As noted, the blends having 20-60% PC-Si (40% Si content) were flexible; they also had a flexural modulus lower than PMMA. Some haze was present in these blends, and haze increased visually with increasing levels of PC-Si. For example, the 30/70 PMMA/PC-Si blend had more haze visually than the 60/40 blend. The 20/80 PMMA/PC-Si blend exhibited evidence of delamination in the extruded strand.

Comparative examples are shown in Table 3A, including examples including a PC-Si copolymer having an Si content of 6.5%, 20% and 60%:

**Table 3 - Formulations Including Different Siloxane Types**

| | **Ex3.1** | **Ex3.2** | **C3.1** | **C3.2** | **C3.3** | **C3.4** | **C3.5** | **C3.6** |
|---|---|---|---|---|---|---|---|---|
| PMMA | 60 | 80 | 100 | | 60 | 60 | 60 | |
| PC-Si (40% Si content) | 40 | 20 | | | | | | 40 |
| LEXAN™ 121R PC | | | | 100 | | | | |
| PC-Si (6.5% Si content) C9030T | | | | | 40 | | | |
| PC-Si (20% Si content) C9030P | | | | | | 40 | | |
| PC-Si (60% Si content) | | | | | | | 40 | |
| Optical Quality PC (OQPC) | | | | | | | | 60 |

| | Microextrusion | | | | | | | |
|---|---|---|---|---|---|---|---|---|
| Copolymer Siloxane wt% | 40 | 40 | N/A | N/A | 6.5 | 20 | 60 | 40 |
| Overall Siloxane Content wt% | 16 | 8 | N/A | N/A | 2.6 | 8 | 24 | 16 |
| %T 2.2 mm ASTM D1003 Compression molded plaque | 82.7 | 89.1 | 94.0 | 86.0 | 16.2 | 31.0 | 46.4 | 12.2 |
| %T 1.2 mm ASTM D1003 Compression molded plaque | 87.1 | 91.7 | 94.0 | 89.2 | 32.5 | 48.5 | 56.8 | 25.2 |
| Appearance: Transparent (T), Minor haze (H), Opaque (O) | T,H | T,H | T | T | O | O | O | O |

| | Macroextrusion | | | | | | | |
|---|---|---|---|---|---|---|---|---|
| Izod Impact- Notched ASTM D256 lbft/ft at 23 °C | 170 | 93 | 35 | 156 | - | - | - | - |
| Izod Impact-Unnotched ASTM D4812 lbft/ft at 23 °C | 986 | 585 | 220 | 720 | - | - | - | - |
| Flexural modulus ASTM D790 in MPa | 1930 | 2520 | 3220 | 2340 | - | | - | - |
| Flexural Stress at break ASTM D790 in MPa | No Break | No Break | 86 | No Break | - | - | - | - |

Transparency in PMMA blends is confined to a narrow compositional range. For example, an opaque blend was produced when the siloxane copolymer (C9030T) included only 6.5 wt% siloxane in the copolymer (C3.3). Likewise, an opaque blend was produced when the copolymer siloxane content was increased to 20 wt% (C3.4). Transparent blends, however, were produced when the siloxane content in the copolymer was around 40 wt% (Ex3.1, Ex3.2). Once the copolymer siloxane content was increased to 60 wt%, however, the blend was again opaque.

PMMA/siloxane copolymer transparency is uniquely derived from the siloxane copolymer and is not achievable by simply blending a targeted level of siloxane from other siloxane copolymers known in the art. For instance, Ex3.2 and comparative example C3.4 each included the average siloxane level of 8 wt% after blending, while only the 80/20 PMMA/PC-Si (40% Si content) (Ex3.2) was transparent.

The PMMA/ PC-Si (40% Si content) blends possessed high impact energy and low flexural modulus. The 60/40 PMMA/ PC-Si (40% Si content) (Ex3.1) sample had an Izod impact energy that was greater than 100% LEXAN™ 121R (C3.2) and substantially greater than 100% PMMA (C3.1). In addition, the blend had lower flexural modulus compared to both LEXAN™ 121R and POQ66 PMMA (Table 3). It was noted that the Izod impact breaks for Ex.3.1 and Ex3.2 were brittle.

Given the lower modulus of PMMA/PC-Si (40% Si content) and low processing temperature, such blends are expected to be a good resin matrix for photochromic dyes. Other dyes such as 3-hydroxy flavone fluorophores would be expected to benefit from the lower processing temperature compared to polycarbonate.

Overall, the example compositions described above were flexible, while rapid impact (Izod) results in brittle breaks.

Based on these findings quantum dot compositions were formed including PMMA and PC-Si (40% Si content) in accordance with Table 4:

**Table 4 - QD Compositions Including Acrylic QDs and PC-Si (40% Si Content)**

| | | **Ex4.1** | **Ex4.2** | **Ex4.3** | **Ex4.4** |
|---|---|---|---|---|---|
| PMMA | wt% | 30 | 48.5 | 30 | 48.5 |
| PC-Si (40% Si content) | wt% | 40 | 40 | 40 | 40 |
| Red QD (acrylic) | wt% | 30 | 11.5 | | |
| Green QD (acrylic) | wt% | | | 30 | 11.5 |
| **Total QD concentration** | wt% | 0.06 | 0.023 | 0.06 | 0.023 |

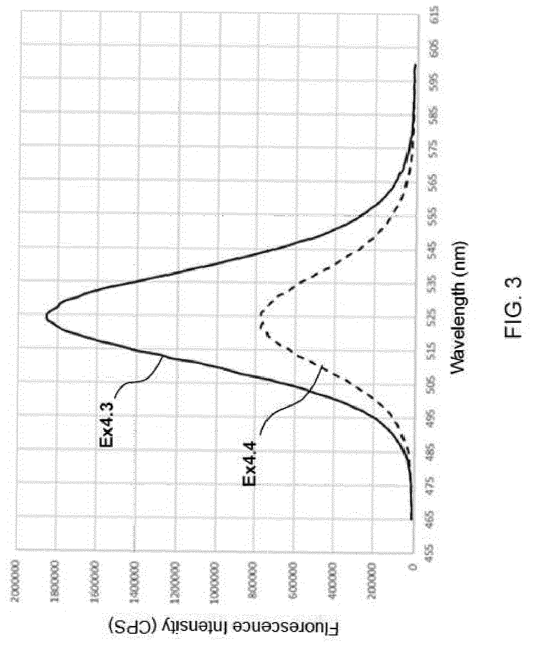

Fluorescence intensity curves for the example compositions are shown in FIGS. 2 and 3, respectively. The compositions including the red QDs (Ex4.1 and Ex4.2) had a peak wavelength (PWL) of around 623 nm, while those including the green QDs (Ex4.3 and Ex4.4) had a PWL of around 523 nm. The compositions also had a narrow emission band (full width at half maximum, FWHM). Results are shown in Table 5:

**Table 5 - PWL and FWHM**

| | **Ex4.1** | **Ex4.2** | **Ex4.3** | **Ex4.4** |
|---|---|---|---|---|
| QD Color | Red | Red | Green | Green |
| Total QD concentration (wt%) | 0.06 | 0.023 | 0.06 | 0.023 |
| PWL, nm | 622.6 | 623.0 | 523.5 | 522.5 |
| FWHM, nm | 30.4 | 30.4 | 33.2 | 33.4 |

The results in Table 5 demonstrate that QDs may be extruded into blends of PMMA and PC-Si copolymer (40% Si content) at multiple concentrations with retention of peak wavelength and a narrow emission band.

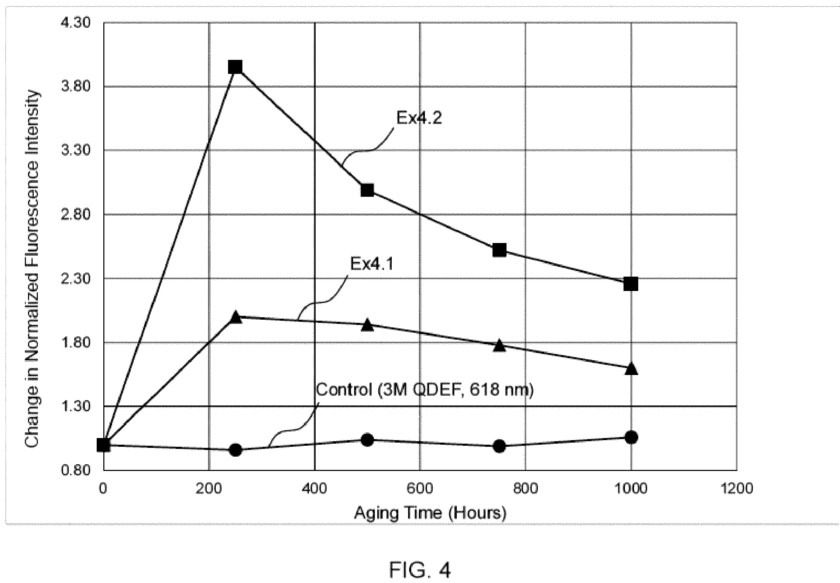

The compositions were also tested to determine performance after exposure to hydrothermal aging. Aging data for the compositions including red QDs (Ex4.1 and Ex4.2) are shown in FIG. 4. Also provided is a control composition (3M QDEF, 618 nm). The samples were exposed to hydrothermal aging for 1000 hours at 60 °C and 95% relative humidity. The results show that fluorescence intensity is intact at up to 1000 hours of aging, as evidenced by an increase in fluorescence intensity of greater than 1.0 (the starting point) at up to 1000 hours of aging.

Thermoplastic compositions including siloxane-treated QDs were also prepared and tested. QD (siloxane-treated) compositions including the red/green QDs from QDBrick described herein had the compositions set forth in Tables 6A and 6B.

**Table 6A - Green QD Film**

| | **60/40 PMMA/PC-Si** | | | | | **80/20 PMMA/PC-Si** | | | | |
|---|---|---|---|---|---|---|---|---|---|---|
| **Component (wt%)** | **Ex6. 1** | **Ex6. 2** | **Ex6. 3** | **Ex6. 4** | **Ex6. 5** | **Ex6. 6** | **Ex6. 7** | **Ex6. 8** | **Ex6. 9** | **Ex6.1 0** |
| PMMA | 55.7 | 56.6 | 57.4 | 59.1 | 59.6 | 74.3 | 75.4 | 76.6 | 78.9 | 79.4 |
| PC-Si (40% Si content) | 37.2 | 37.7 | 38.3 | 39.5 | 39.7 | 18.6 | 18.9 | 19.1 | 19.7 | 19.9 |
| Green QD powder (siloxane-treated) | 7.1 | 5.7 | 4.3 | 1.4 | 0.7 | 7.1 | 5.7 | 4.3 | 1.4 | 0.7 |
| **Total:** | 100 | 100 | 100 | 100 | 100 | 100 | 100 | 100 | 100 | 100 |
| Targeted QD concentratio n in composition | 0.25 | 0.20 | 0.15 | 0.05 | 0.025 | 0.25 | 0.20 | 0.15 | 0.05 | 0.025 |

| | | | | | | | | | | |
|---|---|---|---|---|---|---|---|---|---|---|
| As noted above, the Green QD powder included 3.5 wt% QDs. | | | | | | | | | | |

**Table 6B - Red QD Film**

| | **60/40 PMMA/PC-Si** | | | | | **80/20 PMMA/PC-Si** | | | | |
|---|---|---|---|---|---|---|---|---|---|---|
| **Component (wt%)** | **Ex6.11** | **Ex6.12** | **Ex6.13** | **Ex6.14** | **Ex6.15** | **Ex6.16** | **Ex6.17** | **Ex6.18** | **Ex6.19** | **Ex6.20** |
| PMMA | 54.4 | 55.6 | 56.7 | 58.9 | 59.5 | 72.6 | 74.1 | 75.5 | 78.5 | 79.3 |
| PC-Si (40% Si content) | 36.3 | 37.0 | 37.8 | 39.2 | 39.6 | 18.1 | 18.5 | 18.9 | 19.6 | 19.8 |
| Red QD powder (siloxane-treated) | 9.3 | 7.4 | 5.5 | 1.9 | 0.9 | 9.3 | 7.4 | 5.6 | 1.9 | 0.9 |
| **Total:** | 100 | 100 | 100 | 100 | 100 | 100 | 100 | 100 | 100 | 100 |
| Targeted QD concentration in composition | 0.25 | 0.20 | 0.15 | 0.05 | 0.025 | 0.25 | 0.20 | 0.15 | 0.05 | 0.025 |

| | | | | | | | | | | |
|---|---|---|---|---|---|---|---|---|---|---|
| As noted above, the Red QD powder included 2.7 wt% QDs. | | | | | | | | | | |

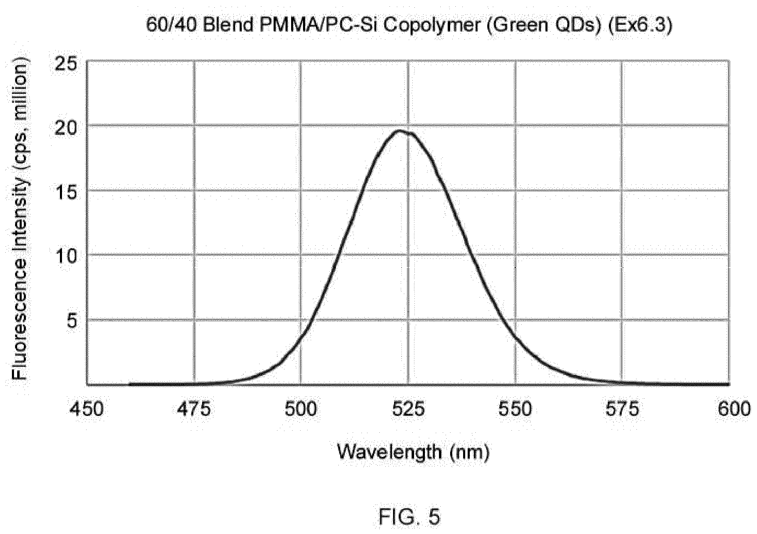

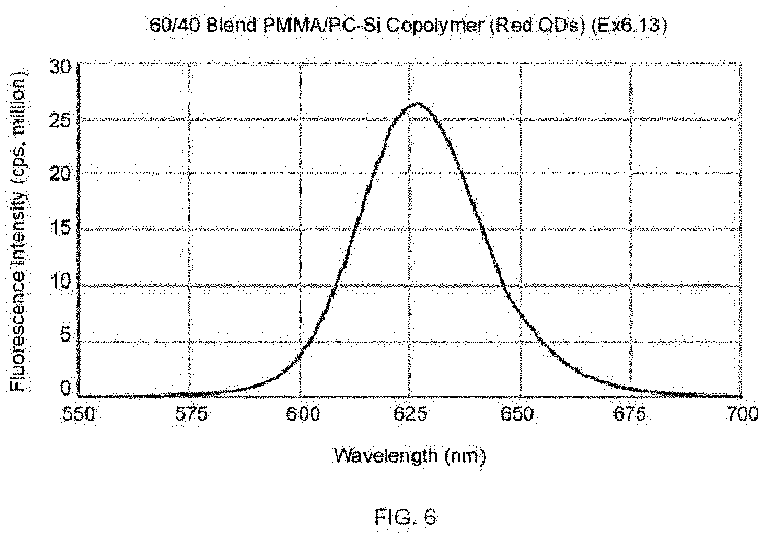

The fluorescence properties of the example compositions was measured; results are shown in Tables 7A and 7B below. Fluorescence data for comparative compositions including only polycarbonate (LEXAN™ 121) instead of the PMMA/PC-Si polymer are also provided. The change (Δ) in PWL and FWHM for each set of examples is calculated from the lowest concentration (0.025 wt%) as the baseline. Fluorescence curves for two of the example compositions - Ex6.3 and Ex6.13 - were also prepared and are shown in FIGS. 5 and 6.

**Table 7A - Green QD Film**

| | **QD Conc. (wt%)** | **PWL (nm)** | **ΔPWL compared to Ex6.5 (nm)** | **FWHM (nm)** | **ΔFWHM compared to Ex6.5 (nm)** |
|---|---|---|---|---|---|
| **60/40 PMMA/PC-Si Film** | | | | | |
| Ex6.1 | 0.25 | 525.5 | 2.7 | 31.9 | 1.7 |
| Ex6.2 | 0.20 | 524.9 | 2.1 | 31.7 | 1.5 |
| Ex6.3 | 0.15 | 524.2 | 1.4 | 31.4 | 1.2 |
| Ex6.4 | 0.05 | 523.2 | 0.4 | 31.2 | 1.0 |
| Ex6.5 | 0.025 | 522.8 | - | 30.2 | - |

| **80/20 PMMA/PC-Si Film** | | | **ΔPWL compared to Ex6.10 (nm)** | | **ΔFWHM compared to Ex6.10 (nm)** |
|---|---|---|---|---|---|
| Ex6.6 | 0.25 | 524.7 | 1.4 | 31.6 | 0.4 |
| Ex6.7 | 0.20 | 524.9 | 1.6 | 31.8 | 0.5 |
| Ex6.8 | 0.15 | 524.2 | 0.9 | 31.5 | 0.2 |
| Ex6.9 | 0.05 | 523.4 | 0.2 | 31.4 | 0.1 |
| Ex6.10 | 0.025 | 523.3 | - | 31.3 | - |

| **100% PC Film** | | | **ΔPWL compared to C6.5 (nm)** | | **ΔFWHM compared to C6.5 (nm)** |
|---|---|---|---|---|---|
| C6.1 | 0.25 | 525.3 | 0.6 | 32.1 | 0.9 |
| C6.2 | 0.20 | 525.5 | 0.7 | 32.2 | 1.0 |
| C6.3 | 0.15 | 524.7 | 0.0 | 32.0 | 0.8 |
| C6.4 | 0.05 | 525.0 | 0.3 | 31.3 | 0.1 |
| C6.5 | 0.025 | 524.7 | - | 31.2 | - |

**Table 7B - Red QD Film**

| | **QD Conc. (wt%)** | **PWL (nm)** | **ΔPWL compared to Ex6.15 (nm)** | **FWHM (nm)** | **ΔFWHM compared to Ex6.15 (nm)** |
|---|---|---|---|---|---|
| **60/40 PMMA/PC-Si Film** | | | | | |
| Ex6.11 | 0.25 | 628.6 | 2.7 | 32.7 | 1.7 |
| Ex6.12 | 0.20 | 628.0 | 2.1 | 32.4 | 1.4 |
| Ex6.13 | 0.15 | 627.1 | 1.2 | 32.0 | 1.0 |
| Ex6.14 | 0.05 | 626.3 | 0.3 | 31.0 | 0.0 |
| Ex6.15 | 0.025 | 625.9 | - | 31.0 | - |

| **80/20 PMMA/PC-Si Film** | | | **ΔPWL compared to Ex6.20 (nm)** | | **ΔFWHM compared to Ex6.20 (nm)** |
|---|---|---|---|---|---|
| Ex6.16 | 0.25 | 627.9 | 1.4 | 32.8 | 1.7 |
| Ex6.17 | 0.20 | 627.8 | 1.2 | 32.6 | 1.5 |
| Ex6.18 | 0.15 | 627.4 | 0.9 | 32.4 | 1.3 |
| Ex6.19 | 0.05 | 626.6 | 0.1 | 31.6 | 0.6 |
| Ex6.20 | 0.025 | 626.5 | - | 31.0 | - |

| **100% PC Film** | | | **ΔPWL compared to C6.10 (nm)** | | **ΔFWHM compared to C6.10 (nm)** |
|---|---|---|---|---|---|
| C6.6 | 0.25 | 627.9 | 3.7 | 32.5 | 2.6 |
| C6.7 | 0.20 | 627.6 | 3.4 | 32.2 | 2.3 |
| C6.8 | 0.15 | 627.1 | 2.9 | 31.8 | 1.9 |
| C6.9 | 0.05 | 625.5 | 1.3 | 30.4 | 0.5 |
| C6.10 | 0.025 | 624.2 | - | 29.9 | - |

From the data in Tables 7A and 7B it is observed that QDs may be extruded into PMMA/PC-Si compositions in multiple concentrations with substantial retention of peak wavelength (PWL) and narrow emission band (full width at half-maximum, FWHM). FIGS. 5 and 6 show a FWHM emission band of about 30 nm for each example composition. Moreover, it was observed that peak wavelength emission does not change much across a large loading level range (i.e., the PWL does not show a substantial red shift).

A comparison of the change (Δ) in PWL and FWHM between compositions having green QDs and red QDs is provided in Table 7C:

**Table 7C -- ΔPWL and ΔFWHM Between Green and Red QDs**

| | **QD Conc. (wt%)** | **ΔPWL (Green QDs) (nm)** | **ΔPWL (Red QDs) (nm)** | **Difference between ΔPWL for Green/Red QDs (nm)** | **ΔFWHM (Green QDs) (nm)** | **ΔFWHM (Red QDs) (nm)** | **Difference between ΔFWHM for Green/Red QDs (nm)** |
|---|---|---|---|---|---|---|---|
| **60/40 PMMA/PC-Si Film** | | | | | | | |
| Ex6.1/Ex6.11 | 0.25 | 2.7 | 2.7 | **0.0** | 1.7 | 1.7 | **0.0** |
| Ex6.2/Ex6.12 | 0.20 | 2.1 | 2.1 | **0.0** | 1.5 | 1.4 | **0.1** |
| Ex6.3/Ex6.13 | 0.15 | 1.4 | 1.2 | **0.2** | 1.2 | 1.0 | **0.2** |
| Ex6.4/Ex6.14 | 0.05 | 0.4 | 0.3 | **0.1** | 1.0 | 0.0 | **1.0** |

| **80/20 PMMA/PC-Si Film** | | | | | | | |
|---|---|---|---|---|---|---|---|
| Ex6.6/Ex6.16 | 0.25 | 1.4 | 1.4 | 0.0 | 0.4 | 1.7 | 1.3 |
| Ex6.7/Ex6.17 | 0.20 | 1.6 | 1.2 | 0.4 | 0.5 | 1.5 | 1.0 |
| Ex6.8/Ex6.18 | 0.15 | 0.9 | 0.9 | 0.0 | 0.2 | 1.3 | 1.1 |
| Ex6.9/Ex6.19 | 0.05 | 0.2 | 0.1 | 0.1 | 0.1 | 0.6 | 0.5 |

| **100% PC Film** | | | | | | | |
|---|---|---|---|---|---|---|---|
| C6.1/C6.6 | 0.25 | 0.6 | 3.7 | 3.1 | 0.9 | 2.6 | 1.7 |
| C6.2/C6.7 | 0.20 | 0.7 | 3.4 | 2.7 | 1.0 | 2.3 | 1.3 |
| C6.3/C6.8 | 0.15 | 0.0 | 2.9 | 2.9 | 0.8 | 1.9 | 1.1 |
| C6.4/C6.9 | 0.05 | 0.3 | 1.3 | 1.0 | 0.1 | 0.5 | 0.4 |

The data in Table 7C demonstrates that certain compositions - and in particular those including a 60/40 PMMA/PC-Si blend - are more suitable for forming a white color from a blend of both the red and green QDs. Specifically, it is desirable in some aspects for both the red and green QDs to behave similarly in a chosen polymer with respect to the ΔPWL and ΔFWHM. If these properties are closely balanced, it will be easier to make a white color from the blend of red and green QDs. As shown in the data, the ΔPWL and ΔFWHM for a particular polymer and QD composition is about the same for both the green QDs and the red QDs in the 60/40 PMMA/PC-Si blend. A greater disparity is observed when comparing these properties in the 80/20 PMMA/PC-Si blends - while for some concentrations there is a similar change between the red and green QDs, there remains a difference in other concentrations. In contrast, all of the polycarbonate compositions exhibit a comparatively large difference in ΔPWL and ΔFWHM between the red and green QDs, which would make it more difficult to achieve a white color when mixing red QDs and green QDs in the polycarbonate composition.

Accordingly, in some aspects the composition includes green quantum dots and red quantum dots as the photoluminescent materials, and a composition including an equal content of green quantum dots and red quantum dots has a change in peak wavelength (ΔPWL) for the green quantum dots that is within about 1.0 nm of the ΔPWL for the red quantum dots. In further aspects the composition has a ΔPWL for the green quantum dots that is within about 0.5 nm of the ΔPWL for the red quantum dots. In specific aspects the composition has a ΔPWL for the green quantum dots that is within about 0.2 nm of the ΔPWL for the red quantum dots.

In particular aspects the composition includes green quantum dots and red quantum dots as the photoluminescent materials, and a composition including an equal content of green quantum dots and red quantum dots has a change in full width at half maximum (ΔFWHM) for the green quantum dots that is within about 1.0 nm of the ΔFWHM for the red quantum dots. In further aspects the composition has a ΔFWHM for the green quantum dots that is within about 0.5 nm of the ΔFWHM for the red quantum dots. In specific aspects the composition has a change in ΔFWHM for the green quantum dots that is within about 0.2 nm of the ΔFWHM for the red quantum dots.

Two compositions including both green and red siloxane-treated quantum dots were formed as shown in Table 8:

**Table 8 - Green and Red QD Film**

| **Component (wt%)** | **Ex8.1** | **Ex8.2** |
|---|---|---|
| PMMA | 57.7 | 57.8 |
| PC-Si (40% Si content) | 38.5 | 38.5 |
| ZnS | 0.5 | 0.5 |
| Green QD powder (siloxane-treated) | 2.5 | 3.0 |
| Red QD powder (siloxane-treated) | 0.8 | 0.2 |
| **Total:** | 100 | 100 |
| | | |
| Green QD content in composition | 0.09 (0.035 x 2.5) | 0.10 (0.035 x 3.0) |
| Red QD content in composition | 0.02 (0.027 x 0.8) | 0.01 (0.027 x 0.2) |
| Ratio of Green/Red QDs in composition | 4.5:1 | 10:1 |

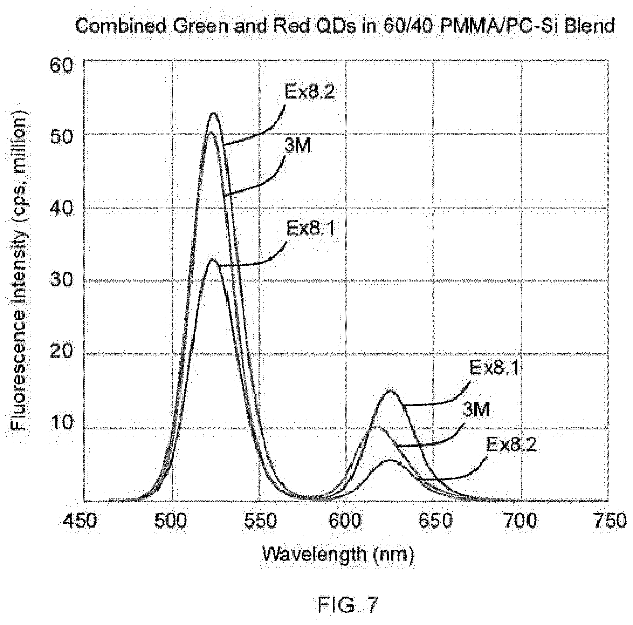

Ex8.1 had about 4.5 times more green QDs than red QDs; Ex8.2 had about 10 times more green QDs than red QDs. The fluorescence intensity curves for these example compositions are shown in FIG. 7, along with a curve for a comparative film by 3M. Comparing the curves of Ex8.1 and 8.2 - which fall above and below the comparative film - it is observed that the emission spectra of the inventive thermoplastic composition can be tuned to compare favorably to that of the comparative film by balancing the amount of green and red QDs in the film and/or the ratio of green to red QDs in the film.

The glass transition temperature (Tg) of the composition of example composition Ex6.1 was determined to evaluate the thermal properties of a composition including siloxane-treated QDs. Tg was determined by Dynamic Mechanical Analysis (DMA), using a TA Instruments Q800 DMA. The testing assembly included a tension clamp for films and was performed within a temperature range of -50 °C to 150 °C at a ramp rate of 2 °C/minute using a 0.0020 Newton preload force and an amplitude of 15 micron.

As noted, Ex6.1 had a QD concentration of about 0.25 wt% in the thermoplastic composition. A substantially identical reference thermoplastic composition including 60/40 PMMA/PC-Si and no quantum dots was also tested. The compositions and Tg data are shown in Table 9:

**Table 9 - Tg of Composition Including Siloxane-Treated QDs**

| | **C6.1** | **Ex6.1** | **Ex6.2** | **Ex6.3** | **Ex6.4** | **Ex6.5** | **Ex4.3** |
|---|---|---|---|---|---|---|---|
| PMMA | 60 | 55.7 | 56.6 | 57.4 | 59.2 | 59.6 | 30 |
| PC-Si (40% Si content) | 40 | 37.2 | 37.7 | 38.3 | 39.4 | 39.7 | 40 |
| Green QD powder (siloxane-treated) | - | 7.1 | 5.7 | 4.3 | 1.4 | 0.7 | |
| Green QD (acrylic) | - | - | - | - | - | - | 30 |
| **Total:** | 100 | 100 | 100 | 100 | 100 | 100 | 100 |
| Targeted QD concentration in composition | - | 0.25 | 0.2 | 0.15 | 0.05 | 0.025 | 0.06 |
| | | | | | | | |
| **Tg (°C) by DMA** | 123.5 | 129.2 | 127.6 | 127.0 | 127.6 | 127.5 | 125 |

Is was observed that Tg increased by at least about 3 °C when the siloxane-treated QDs were added to the PMMA/PC-Si composition. For comparison, the Tg of the composition of Ex4.3 including quantum dots in the acrylic dispersion polymer was about 125 °C, which although better than the composition of the PMMA/PC-Si composition, was lower than the Tg of the compositions including siloxane-treated QDs. The higher Tg value may be desirable in various display and lighting applications, such as but not limited to those in which the LED source generates and unintentionally transfers heat to nearby components.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

1. A thermoplastic composition comprising:
a thermoplastic polymer comprising from about 30 wt% to about 90 wt% poly(methyl methacrylate) (PMMA) and from about 5 wt% to about 70 wt% of a poly(carbonate-siloxane) copolymer having a siloxane content of from about 20 wt% to about 60 wt%; and
a plurality of photoluminescent materials.

2. The thermoplastic composition according to claim 1, wherein the poly(carbonate-siloxane) copolymer has a siloxane content of from about 35 wt% to about 45 wt%.

3. The thermoplastic composition according to claim 1 or 2, wherein the plurality of photoluminescent materials comprise quantum dots, phosphors, fluorescent materials, semiconductor nanocrystals, or a combination thereof.

4. The thermoplastic composition according to any of claims 1 to 3, wherein the plurality of photoluminescent materials comprise quantum dots, and the quantum dots are incorporated into an acrylic dispersion polymer.

5. The thermoplastic composition according to any of claims 1 to 3, wherein the plurality of photoluminescent materials comprise quantum dots, and the quantum dots are siloxane-treated or silica-treated.

6. The thermoplastic composition according to claim 4 or 5, wherein the thermoplastic composition has a glass transition temperature that is at least about 3 °C higher than that of a substantially identical reference thermoplastic composition that does not include the plurality of photoluminescent materials.

7. The thermoplastic composition according to any of claims 1 to 3, wherein the plurality of photoluminescent materials comprise siloxane-treated or silica-treated quantum dots, the quantum dots comprise from about 0.01 wt% to about 1.0 wt% of the thermoplastic composition, and the thermoplastic composition has a glass transition temperature that is at least about 3 °C higher than that of a substantially identical reference thermoplastic composition that does not include the plurality of photoluminescent materials.

8. The thermoplastic composition according to any of claims 3 to 7, wherein the quantum dots comprise an alumina shell and have a core-shell structure or are concentration-gradient quantum dots.

9. The thermoplastic composition according to any of claims 1 to 8, wherein the composition further comprises one or more additional additives, wherein the one or more additional additives is selected from the group consisting of: a filler; a pigment; a whitening agent; an optical brightener; a surfactant; a processing aid; a thermal stabilizer; a photochemical stabilizer; a light scattering agent; and combinations thereof.

10. The thermoplastic composition according to claim 9, wherein the light scattering agent comprises ZnS, TiO₂, BaSO₄, silica, a siloxane-based material, an acrylic-based material, a metal oxide, or a combination thereof.

11. The thermoplastic composition according to any of claims 1 to 10, wherein the composition has a nano-dispersed poly(carbonate-siloxane) copolymer phase in the PMMA and a single glass transition temperature (Tg).

12. The thermoplastic composition according to any of claims 4 to 11, wherein the quantum dots comprise CdS, InP, ZnS, ZnO, CuInS, CdSeS, CdSe, cadmium-free quantum dots, or a combination thereof.

13. The thermoplastic composition according to any of claims 1 to 12, wherein the plurality of photoluminescent materials comprise green quantum dots and red quantum dots, and a composition comprising an equal content of green quantum dots and red quantum dots comprises a change in peak wavelength (ΔPWL) for the green quantum dots that is within about 1.0 nanometers (nm) of the ΔPWL for the red quantum dots.

14. The thermoplastic composition according to any of claims 1 to 12, wherein the plurality of photoluminescent materials comprise green quantum dots and red quantum dots, and a composition comprising an equal content of green quantum dots and red quantum dots comprises a change in full width at half maximum (ΔFWHM) for the green quantum dots that is within about 1.0 nm of the ΔFWHM for the red quantum dots.

15. An article comprising the thermoplastic composition according to any of claims 1 to 14, wherein the article is a film for an electronic display application.
